Europäisches Patentamt

European Patent Office

Office européen des brevets

(19)

(11) Veröffentlichungsnummer : **0 417 131 B1**

(12) **EUROPÄISCHE PATENTSCHRIFT**

(45) Veröffentlichungstag der Patentschrift :
12.08.92 Patentblatt 92/33

(51) Int. Cl.$^5$ : **B60H 1/00**

(21) Anmeldenummer : 89905633.7

(22) Anmeldetag : 17.05.89

(86) Internationale Anmeldenummer :
PCT/DE89/00311

(87) Internationale Veröffentlichungsnummer :
WO 89/11980 14.12.89 Gazette 89/29

(54) SCHWENKBARES LEITELEMENT, INSBESONDERE FÜR EINE ZU EINEM KRAFTFAHRZEUG GEHÖRENDE ANLAGE ZUR KLIMATISIERUNG DESSEN FAHRGASTRAUMES.

(30) Priorität : 01.06.88 DE 3818565

(43) Veröffentlichungstag der Anmeldung :
20.03.91 Patentblatt 91/12

(45) Bekanntmachung des Hinweises auf die
Patenterteilung :
12.08.92 Patentblatt 92/33

(84) Benannte Vertragsstaaten :
DE FR IT SE

(56) Entgegenhaltungen :
DE-U- 8 512 778
FR-A- 1 522 379
FR-A- 2 177 174

(56) Entgegenhaltungen :
FR-A- 2 483 559
GB-A- 2 001 385
GB-A- 2 072 327
US-A- 4 513 771

(73) Patentinhaber : ROBERT BOSCH GMBH
Postfach 30 02 20
W-7000 Stuttgart 30 (DE)

(72) Erfinder : SCHEIDEL, Wolfgang
Thomas-Mann-Str. 9
W-7580 Bühl (DE)
Erfinder : STENGER, Jürgen
Buchenweg 4
W-7505 Ettlingen (DE)
Erfinder : VAN WIJHE, Albert
Büchelbachstr. 44
W-7582 Bühlertal (DE)

EP 0 417 131 B1

## Beschreibung

### Stand der Technik

Die Erfindung geht aus von einem schwenkbarem Leitelement nach der Gattung des Hauptanspruchs. Es ist schon ein solches Leitelement bekannt, bei das Axialspiel als unvermeidbar hingenommen wird und bei dem man zur Beseitigung des Radialspiels der Zapfenlagerung einen Filzring beilegt, der dieses Spiel ausgleichen soll. Neben den durch die Montage des Filzrings anfallenden Kosten, muff die Wandung einen Durchbruch aufweisen, da sich der Filzring nur von außen montieren läßt. Ein solcher Durchbruch läßt sich danach aber nicht mehr mit vertretbarem Aufwand abdichten. Das nicht beseitigbare Axialspiel führt in vielen Fällen auch zu Klappergeräuschen, die aber vermieden werden sollen.

### Vorteile der Erfindung

Das erfindungsgemäße schwenkbare Leitelement mit den kennzeichnenden Merkmalen des Hauptanspruchs hat demgegenüber den Vorteil, daß die elastisch verformbaren Abschnitte sich in zusammengebautem Zustand der Zapfenlagerung vorgespannt an der anderen Lagerfläche abstützend alle unerwünschten Lagerspiele beseitigen, so daß die Montage beispielsweise eines Filzringes entfallen kann.

Deshalb kann auch auf den Montagedurchbruch verzichtet werden, so daß der Luftleitkanal im Bereich der Zapfenlagerung für das Schwenkelement absolut dicht ausgeführt werden kann.

Durch die in den Unteransprüchen aufgeführten Maßnahmen sind vorteilhafte Weiterbildungen und Verbesserungen des im Hauptanspruch angegebenen Schwenkelements möglich.

### Zeichnung

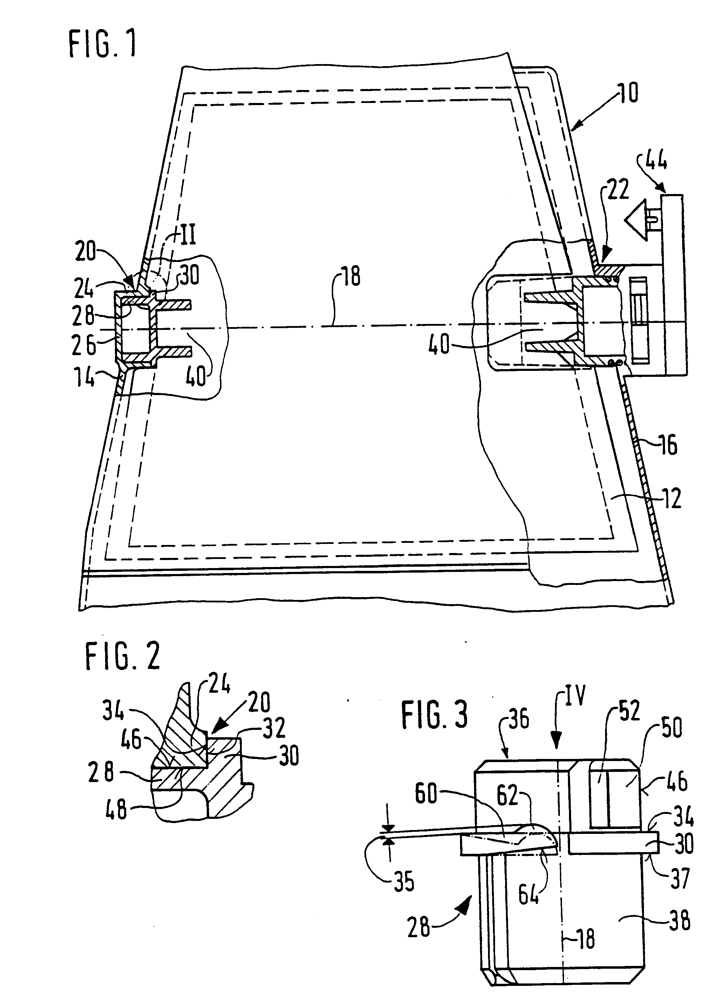

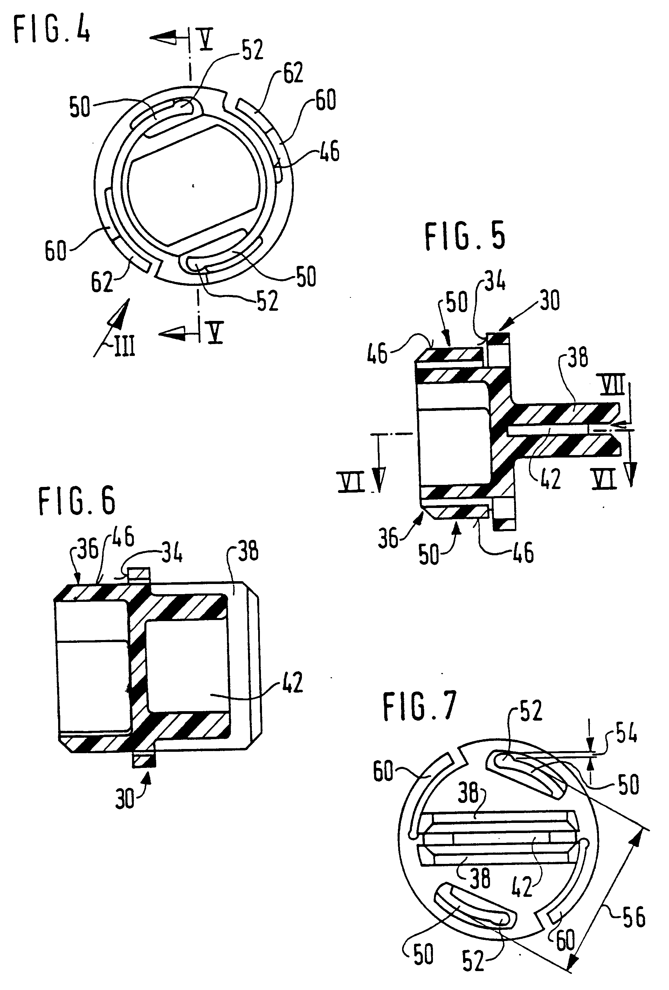

Ein Ausführungsbeispiel der Erfindung ist in der Zeichnung dargestellt und in der nachfolgenden Beschreibung näher erläutert. Es zeigen Figur 1 eine Teilansicht eines Luftleitkanals einer zu einem Kraftfahrzeug gehörenden Klimaanlage, im Bereich eines schwenkbaren Leitelements teilweise geschnitten, Figur 2 eine Einzelheit bei II in Figur 1, in vergrößerter Darstellung, Figur 3 die Ansicht eines zum Schwenkgelenk gehörenden Lagerzapfens, in Richtung des Pfeiles 111 in Figur 4 gesehen, Figur 4 eine Draufsicht auf den Lagerzapfen, in Richtung des Pfeiles IV in Figur 3 gesehen, Figur 5 einen Schnitt durch den Lagerzapfen entlang der Linie V-V in Figur 4, Figur 6 einen Schnitt durch den Lagerzapfen entlang der Linie VI-VI in Figur 5 und Figur 7 eine Ansicht des Lagerzapfens in Richtung des Pfeiles VII in Figur 5 gesehen.

### Beschreibung des Ausführungsbeispiels

In Figur 1 ist ein Abschnitt eines Luftleitkanals 10 in Ansicht dargestellt, der zu einer Klimaanlage eines Kraftfahrzeuges gehört. Der Luftleitkanal 10 führt zum nicht dargestellten Fahrgastraum eines Kraftfahrzeuges. Der Abschnitt des Luftleitkanals 10 weist ein schwenkbares Luftleitelement 12 auf, das in Abhängigkeit von seiner jeweiligen Betriebsstellung Luft in einer vorbestimmten Richtung durch nicht dargestellte Teilkanäle leitet. Dabei ist das Luftleitelement 12 in zwei einander gegenüberliegenden, aus Kunststoff bestehenden Wänden 14, 16 des Kanals 10 derart gelagert, daß es um eine Schwenkachse 18 schwenkbar ist. Es ergeben sich somit zwei mit Abstand voneinander angeordnete, miteinander fluchtende Zapfenlagerungen 20 und 22, von denen im folgenden Zapfenlagerung 20 näher betrachtet werden soll. Es ist klar, daß es sich bei Kanalwandungen 14, 16 um gestellfeste Bauelemente handelt. Wie Figur 1 weiter zeigt, weist die Kanalwand 14 eine Lagerbuchse 24 auf, die zum Inneren des Kanals 10 hin geöffnet ist. Die Lagerbuchse 24 ist an ihrer Außenseite durch eine Endwand 26 verschlossen, so daß der Luftleitkanal 10 im Bereich der Zapfenlagerung 20 absolut dicht ist. Weiter nimmt die Lagerbuchse 24 einen Lagerzapfen 28 auf, der mit einem Ringbund 30 versehen ist, welcher mit der inneren, ihm zugewandten Ringstirnfläche 32 der Lagerbuchse 20 zusammenwirkt. Die Ringstirnfläche 32 bildet somit eine Schulterfläche, an der sich eine Gegenschulterfläche 30 des Ringbundes 30 des Lagerzapfens 28 abstützt. Diese Situation ist insbesondere aus der vergrößerten Darstellung in Figur 2 ersichtlich.

Die Ausgestaltung des Lagerzapfens 28 soll im folgenden anhand der Figuren 3 bis 7 erläutert werden.

Der aus einem elastischen Kunststoff bestehende Lagerzapfen 28 weist zunächst einen in der Lagerbuchse 24 geführten Zapfen 36 auf, der bis zu dem Ringbund 30 bzw. bis zu der ihm zugewandten Gegenschulterfläche 30 des Ringbunds 30 führt. Auf seiner von dem Zapfen 36 abgewandten Seite schließt sich an den Ringbund 30 ein in Richtung der mit der Schwenkachse 18 des Leitelements 12 identischen Zapfendrehachse 18 gerichteter Ansatz an, der eine Drehmitnahme 38 für das Luftleitelement 12 bildet. Wie Figur 1 zeigt, greift dieses mit Zungen 40 in Aufnahmen 42, so daß eine Drehmitnahme zwischen dem Lagerzapfen 28 und Leitelement 12 sichergestellt ist. Die Schwenkbewegung selbst wird über einen in Figur 1 eingezeichneten Hebel 44 und über die Zapfenlagerung 22 auf das Luftleitelement 12 gefürt, wobei die Zapfenlagerung 22 ähnlich der beschriebenen Lagerung 20 ausgebildet ist. Wie die Figuren 1 und 2 weiter zeigen, weist der Lagerzapfen 28 eine Mantelfläche 46 auf, die in zusammengebautem Zustand der Zapfenlagerung 20 an der Bohrungswandfläche 48 der Lagerbuchse 24 aufgrund von unvermeidbaren Fertigungstoleranzen mit mehr oder weniger Spiel gefürt ist. Zum Beseitigen vorhandenen Radialspiels des Lagerzapfens 36 in der Lagerbuchse 24 weist der Zapfen 36 an seiner Mantelfläche 46 einen elastisch verformbaren Abschnitt 50 auf, dem ein relativ unelastische Abschnitt der mit ihm zusammenwirkenden Bohrungswandfläche 48 der Lagerbuchse 24 zugeordnet ist. Der elastisch verformbare Abschnitt 50 an der Mantelfäche 46 des Zapfens 36 wird dadurch erreicht, daß als ein sich über einen bestimmten Winkel um die Zapfendrehachse 18 erstreckender, an einem Ende mit der Mantelfäche 46 fest verbundene Lappen 50 ausgebildet ist, der mit der Bohrungswandfläche 48 der Lagerbuchse 24 zusammenwirkt. Dazu weist der Lappen 50 an seinem freien Ende einen Wulst 52 auf (Figuren 4 und 7), der um ein Maß 54 über die Kontur der Zapfenmantelfläche 46 hinausragt. Wie insbesondere Figur 4 zeigt, sind an dem Zapfen 36 zwei einander diametral gegenüberliegend angeordnete, elastisch verformbare Abschnitte oder Lappen 50 vorhanden. Die Anordnung der beiden Lappen 50 ist dabei so getroffen, daß zumindest deren Wulste 52 um das Maß 54 über den Durchmesser 56 des Zapfens 36 hinausragen, wenn der Lagerzapfen 28 nicht in die Lagerbuchse 24 eingebaut ist.

Weiter zeigen die Figuren 3 bis 7, daß auch der Ringbund 30 zwei einander diametral gegenüberliegende, elastisch verformbare Abschnitte 60 hat. Diese beiden Abschnitte sind durch Arme gebildet, welche nur mit ihrem einen Ende fest mit dem Ringbund 30 verbunden sind. Die Arme sind insbesondere in Richtung der Zapfendrehachse 18 elastisch auslenkbar. Wie insbesondere die Figuren 4 und 7 zeigen, erstrecken sich die Arme 60 über einen bestimmten Winkel um die Zapfendrehachse. Die beiden Arme 60 sind so ausgebildet, daß sie mit ihren freien Enden mit der ihnen zugewandten Ringstirnfläche 32 der Lagerbuchse 24 zusammenarbeiten, wenn der Zapfen 36 in die Lagerbuchse 24 eingebaut ist. Dazu weist jeder Arm 60 an seinem freien Ende einen der Ringstirnfläche 32 zugewandten Nocken 62 auf, der in ungespanntem Zustand, d. h. also wenn der Lagerzapfen 28 nicht eingebaut ist, mit einem Maß 35 über eine quer zur Zapfendrehachse 18 liegende Ebene hinausragt, welche durch die Gegenschulterfläche 34 des Ringbundes 30 gebildet ist. Weiter zeigt insbesondere Figur 3, daß der Arm 60 mit seiner dem Nocken 62 gegenüberliegenden Fläche 64 gegenüber einer Ebene zurückspringt, welche durch die von der Mantelfläche 46 des Zapfens 36 abgewandte Stirnfläche 37 des Ringbundes 30 gebildet ist. Wenn der Nocken 62 also mit der ihm zugewandten Ringstirnfläche 32 der Lagerbuchse 24 zusammenwirkt, kann der Arm 60 elastisch in eine Lage ausweichen, welche in Figur 3 strichpunktiert dargestellt ist.

Die Anordnung der Lappen 50 und der Arme 60 in bezug aufeinander ist so getroffen, daß diese, bezogen auf die Schwenkachse 18 des Lagerzapfens 28, um ca. 90 Grad verdreht zueinander angeordnet sind. Die Elastizität der beiden Lappen 50 und der beiden Arme 60 wird dadurch erreicht, daß diese in bezug auf den Ringbund 30 und/oder in bezug auf die Mantelfläche 46 des Lagerzapfens 28 in ihrer Umfangserstreckung völlig freigelegt sind. Die einstückige Verbindung der Lappen 50 bzw. der Arme 60 zum Lagerzapfen 28 bzw. zu dessen Ringbund 30 wird ausschließlich dadurch sichergestellt, daß diese elastischen Abschnitte an ihren von den Wulsten 52 bzw. von den Nocken 62 abgewandten Enden mit dem Zapfen 36 bzw. mit dem Ringbund 30 verbunden sind.

In eingebautem Zustand wird also durch die elastischen Arme 60 mit ihren Nocken 62 ein erhebliches Axialspiel in der Lagerung 20, 22 des Luftleitelements 12 eliminiert. Weiter sorgen die Lappen 50 in Verbindung mit ihren Wulsten 52 für eine Vermeidung des Radialspiels des Zapfens 36 in der Lagerbuchse 24, weil sich die Wulste 52 an der Bohrungswandfläche 48 der Lagerbuchse 24 vorgespannt abstützen. Die Größe des eliminierbaren Spiels wird in Figur 4 durch das Maß 54 und in Figur 3 durch das Maß 35 demonstriert. Somit ist klar, daß wenigstens eine der miteinander zusammenwirkenden Flächen 32, 34 bzw. 46, 48 zumindest einen elastisch verformbaren Abschnitt 60 bzw. 50 aufweist, der in entspanntem Zustand über die Kontur hinausragt, welche er in eingebautem und damit in gespanntem Zustand einnimmt. Die elastisch verformbaren Abschnitte 50 bzw. 60 sind dann also in eingebautem Zustand gespannt, wobei sie sich an den mit ihnen zusammenarbeitenden Gegenflächen 48 bzw. 32 abstützen. Das beim Stand der Technik üblicherweise vorhandene Spiel ist somit vermieden.

## Patentansprüche

1. Um eine Achse (18) schwenkbares Leitelement (12), insbesondere für eine zu einem Kraftfahrzeug gehörende Anlage zur Klimatisierung dessen Fahrgastraumes, das über zwei miteinander fluchtende, mit Abstand voneinander angeordnete Zapfenlagerungen (20, 22) an einem gestellfesten Bauelement, vorzugsweise an der Wandung eines Luftleitkanals (10) geführt ist, wobei die Zapfenlagerungen (20, 22) an beiden Seiten je eine mit dem gestellfesten Bauelement (10) verbundene Lagerbuchse (24) und je einen mit dem Leitelement (12) verbundenen Lagerzapfen (28) aufweisen und bei der die Lagerbuchse (24) und der Lagerzapfen (28) mit jeweils einander zugewandten Schulterflächen (32) beziehungsweise Gegenschulterflächen (34) versehen sind, welche eine in Richtung der Schwenkachse (18) gerichtete Relativbewegung von Lagerbuchse (24) und Lagerzapfen (28) zueinander begrenzen und die Bohrungswandfläche (48) jeder Lagerbuchse (24) mit einer Mantelfläche (46) des ihr zugeordneten Lagerzapfens (28) zusammenwirkend das Leitelement (12) radial zur Schwenkachse (18) führt, dadurch gekennzeichnet, daß wenigstens eine der miteinander zusammenarbeitenden Flächen (32, 34 beziehungsweise 46, 48) von Lagerbuchse (24) beziehungsweise Lagerzapfen (28) zumindest einen elastisch verformbaren Abschnitt (50 beziehungsweise 60) aufweist, der in entspanntem Zustand über die Kontur hinausragt, welche er in eingebautem und damit in gespanntem Zustand einnimmt.

2. Leitelement nach Anspruch 1, dadurch gekennzeichnet, daß jedem elastisch verformbaren Abschnitt (50 bzw. 60) der einen Flächen (34 bzw. 46) ein relativ unelastischer Abschnitt des mit dieser zusammenwirkenden Bereichs der anderen Fläche (32 bzw. 48) gegenüberliegt.

3. Leitelement nach einem der Ansprüche 1 oder 2, dadurch gekennzeichnet, daß der Lagerzapfen (28) als separates, mit den Elementen (10, 12) verbindbares Bauteil ausgebildet ist.

4. Leitelement nach Anspruch 3, dadurch gekennzeichnet, daß der Lagerzapfen (28, 36) in einer Lagerbuchse (24) des gestellfesten Bauelements (10) drehbar gelagert ist.

5. Leitelement nach Anspruch 3, dadurch gekennzeichnet, daß der Lagerzapfen (36) mit einem Ringbund (30) versehen ist, der wenigstens einen in Richtung der Zapfendrehachse (18) elastisch auslenkbaren Abschnitt (60) aufweist.

6. Leitelement nach Anspruch 5, dadurch gekennzeichnet, daß der Abschnitt (60) des Ringbundes (30) als ein sich über einen bestimmten Winkel um die Zapfendrehachse (18) erstreckender, an einem Ende mit dem Ringbund (30) fest verbundener Arm ausgebilbet ist, der mit einer als Gegenschulter wirkenden Ringfläche (32) der Lagerbuchse (24) zusammenwirkt.

7. Leitelement nach Anspruch 6, dadurch gekennzeichnet, daß der Arm (60) an seinem freien Ende mit einem Nocken (62) versehen ist, der über die eine Schulterfläche bildende, in Richtung der Zapfendrehachse (18) weisende Ringstirnfläche (32) hinausragt.

8. Leitelement nach Anspruch 7, dadurch gekennzeichnet, daß der Arm (60) mit seiner dem Nocken (62) gegenüberliegenden Fläche gegenüber einer Ebene zurückspringt, welche durch die von der Mantelfläche (46) des Lagerzapfens (28) abgewandten Stirnfläche (37) des Ringbundes (30) gebildet ist.

9. Leitelement nach einem der Ansprüche 5 bis 8, dadurch gekennzeichnet, daß der Lagerzapfen (28) an der von seiner Mantelfläche (46) abgewandten Stirnfläche (37) des Ringbundes (30) einen in Richtung der Zapfendrehachse (18) gerichteten Ansatz aufweist, der mit einer Drehmitnahme (38) für das Leitelement (12) versehen ist.

10. Leitelement nach einem der Ansprüche 5 bis 9, dadurch gekennzeichnet, daß der Lagerzapfen (28) an seinem Ringbund (30) zwei einander diametral gegenüberliegende, elastisch auslenkbare Abschnitte (60) aufweist.

11. Leitelement nach einem der Ansprüche 1 bis 10, dadurch gekennzeichnet, daß der Lagerzapfen (28) an seiner Mantelfläche (46) wenigstens einen radial zur Zapfendrehachse (18) elastisch auslenkbaren Abschnitt (50) aufweist.

12. Leitelement nach Anspruch 11, dadurch gekennzeichnet, daß der Abschnitt (50) an der Mantelfläche (46) als ein sich über einen bestimmten Winkel um die Zapfendrehachse (18) erstreckender, an einem Ende mit der Mantelfläche (46) fest verbundener Lappen (50) ausgebildet ist, der mit der Bohrungswandfläche (48) der Lagerbuchse (24) zusammenwirkt.

13. Leitelement nach Anspruch 12, dadurch gekennzeichnet, daß der Lappen (50) an seinem freien Ende mit einem Wulst (52) versehen ist, der über die Kontur der Zapfenmantelfläche (46) hinausragt.

14. Leitelement nach einem der Ansprüche 11 bis 13, dadurch gekennzeichnet, daß der Lagerzapfen (28) an seiner Mantelfläche (46) zwei einander diametral gegenüberliegende, elastisch auslenkbare Abschnitte (50) aufweist.

15. Leitelement nach einem der Ansprüche 10 bis 14, dadurch gekennzeichnet, daß die beiden am Ringbund (30) angeordneten Abschnitte (60) gegenüber den beiden Abschnitten (50) an der Mantelfläche (46) des Lagerzapfens (28) um ca. 90 Grad verdreht angeordnet sind.

16. Leitelement nach einem der Ansprüche 5 bis 15, dadurch gekennzeichnet, daß sowohl der elastische Arm (60) der Ringfläche (32) des Ringbundes (30) als auch der elastische Lappen (50) an der Mantelfläche (46) des Lagerzapfens (28) ausschließlich über das fest mit diesem verbundene Ende des Armes (60) bzw. des Lappens (50) erfolgt.

4

17. Leitelement nach einem der Ansprüche 1 bis 16, dadurch gekennzeichnet, daß der Lagerzapfen (28) aus einem elastischen Kunststoff hergestellt ist.

18. Leitelement nach Anspruch 17, dadurch gekennzeichnet, daß der Lagerzapfen (28) einstückig mit dem Leitelement (12) verbunden ist.

## Claims

1. Guide element (12) pivotable about an axis (18), in particular for an air-conditioning system for the passenger compartment of a motor vehicle, which guide element is guided via two mutually aligned journal mountings (20, 22), disposed at a distance from each other, on a chassis-fixed structural element, preferably on the wall of an air duct (10), the journal mountings (20, 22) exhibiting on both sides respectively a bearing bush (24) connected to the chassis-fixed structural element (10) and a bearing journal (28) connected to the guide element (12) and in which the bearing bush (24) and the bearing journal (28) are provided, in each case, with mutually facing shoulder surfaces (32) or counter-shoulder surfaces (34), which limit a movement, directed in the direction of the swivel axis (18), of bearing bush (24) and bearing journal (28) relative to each other and the bore wall surface (48) of each bearing bush (24), in interaction with a contacting surface (46) of the bearing journal (28) assigned to it, guides the guide element (12) radially to the swivel axis (18), characterised in that at least one of the mutually interacting surfaces (32, 34 or 46, 48) of the bearing bush (24) or bearing journal (28) exhibits at least one elastically deformable section (50 or 60), which, in the relaxed state, projects out over the contour which it assumes in the installed and hence in the tensioned state.

2. Guide element according to Claim 1, characterised in that each elastically deformable section (50 or 60) of the one surface ( 34 or 46 ) is faced by a relatively unelastic section of the therewith interacting area of the other surface (32 or 48).

3. Guide element according to one of Claims 1 or 2, characterised in that the bearing journal (28) is configured as a separate component which can be connected to the elements (10, 12).

4. Guide element according to Claim 3, characterised in that the bearing journal (28, 36) is rotatably mounted in a bearing bush (24) of the chassis-fixed structural element (10).

5. Guide element according to Claim 3, characterised in that the bearing journal (36) is provided with a ring collar (30), which exhibits at least one section (60) which is elastically deflectable in the direction of the journal's rotational axis (18).

6. Guide element according to Claim 5, characterised in that the section (60) of the ring collar (30) is configured as an arm, extending over a certain angle about the journal's rotational axis (18) and fixed at one end to the ring collar (30), which arm interacts with a ring surface (32), acting as a counter-shoulder, of the bearing bush (24).

7. Guide element according to Claim 6, characterised in that the arm (60) is provided at its free end with a cam (62) projecting out over the ring face (32) which forms a shoulder surface and which points in the direction of the journal's rotational axis (18).

8. Guide element according to Claim 7, characterised in that the arm (60) springs back having its cam (62)-facing surface opposite a plane which is formed by the face (37) of the ring collar (30) which faces away from the contacting surface (46) of the bearing journal (28).

9. Guide element according to one of Claims 5 to 8, characterised in that the bearing journal (28) exhibits, on the face (37) of the ring collar (30) facing away from its contacting surface (46), a projection directed in the direction of the journal's rotational axis (18), which projection is provided with a rotating lug (38) for the guide element (12).

10. Guide element according to one of Claims 5 to 9, characterised in that the bearing journal (28) exhibits on its ring collar (30) two diametrically facing, elastically deflectable sections (60).

11. Guide element according to one of Claims 1 to 10, characterised in that the bearing journal (28) exhibits on its contacting surface (46) at least one section (50) which is elastically deflectable radially to the journal's rotational axis (18).

12. Guide element according to Claim 11, characterised in that the section (50) on the contacting surface (46) is configured as a tab (50), extending over a certain angle about the journal's rotational axis (18) and fixed at one end to the contacting surface (46), which tab interacts with the bore wall surface (48) of the bearing bush (24).

13. Guide element according to Claim 12, characterised in that the tab (50) is provided at its free end with a bulge (52), which projects out over the contour of the journal's contacting surface (46).

14. Guide element according to one of Claims 11 to 13, characterised in that the bearing journal (28) exhibits on its contacting surface (46) two diametrically facing, elastically deflectable sections (50).

15. Guide element according to one of Claims 10 to 14, characterised in that the two sections (60) disposed on the ring collar (30) are rotationally offset by about 90 degrees in relation to the two sections (50) on the contacting surface (46) of the bearing journal (28).

16. Guide element according to one of Claims 5 to 15, characterised in that both the elastic arm (60) of the ring surface (32) of the ring collar (30) and the elastic tab (50) on the contacting surface (46) of the bearing journal (28) are realised exclusively via the end of the arm (60) or tab (50) fixed to the bearing journal.

17. Guide element according to one of Claims 1 to 16, characterised in that the bearing journal (28) is made of an elastic synthetic material.

18. Guide element according to Claim 17, characterised in that the bearing journal (28) is connected in one piece to the guide element (12).


**Revendications**

1. Elément de conduite (12) pivotante sur un axe (18) en particulier pour une installation de climatisation faisant partie d'un véhicule automobile de son habitacle, qui est amenée à un élément de construction solidaire du châssis par l'intermédiaire de deux pivots (20, 22) disposées en alignement l'une avec l'autre, à une certaine distance l'une de l'autre, de préférence sur la paroi d'une canalisation d'air (10), les pivots (20, 22) présentant sur leurs deux côtés chaque fois un coussinet (24) relié à l'élément de construction (10) solidaire du châssis et respectivement un tourillon (28) relié à l'élément de conduite (12) et dans lequel le coussinet (24) et le tourillon (28) sont pourvus respectivement d'épaulements (32) ou de contre épaulements (34) tournés les uns vers les autres, qui délimitent un mouvement relatif du coussinet (24) et du tourillon (28) l'un vers l'autre dirigé dans le sens de l'axe de pivotement (18) et la paroi alésée (48) de chaque coussinet (24) mène radialement par rapport à l'axe de pivotement (18) l'élément directeur (12) en coopérant avec une enveloppe (46) du tourillon (28) qui lui est associé, conduite pivotante caractérisée en ce qu'au moins l'une des surfaces qui coopèrent ensemble (32, 34 ou 46, 48) du coussinet (24) ou du tourillon (28) présente au moins une section (50 ou 60) qui peut se déformer élastiquement, et fait saillie dans son état détendu sur le contour qu'elle prend à l'état monté et par là à l'état tendu.

2. Elément de conduite selon la revendication 1, caractérisé en qu'une section relativement non élastique de la zone coopérant avec une surface (34 ou 46) de l'autre surface (32 ou 48) se trouve en regard de chaque section (50 ou 60), pouvant se déformer élastiquement, de l'une des surfaces (34 ou 46).

3. Elément de conduite selon l'une des revendications 1 ou 2, caractérisé en ce que le tourillon (28) est constitué comme un élément séparé de construction pouvant être relié aux éléments (10, 12).

4. Elément de conduite selon la revendication 3, caractérisé en ce que le tourillon (28, 36) est monté de façon à pouvoir tourner dans un coussinet (24) de l'élément de construction (10) solidaire du châssis.

5. Elément de conduite selon la revendication 3, caractérisé en ce que le tourillon (36) est pourvu d'une collerette annulaire (30), qui présente au moins une section (60) extensible dans le sens de l'axe (18) de rotation du tenon.

6. Elément de conduite selon la revendication 5, caractérisé en ce que la section (60) de la collerette annulaire (30) est constituée comme un bras s'étendant sur un certain angle sur l'axe (18) de rotation du tenon, et solidement relié par une extrémité de la collerette annulaire (30), bras qui coopère avec une surface annulaire (32) du coussinet (24) agissant comme contre épaulement.

7. Elément de conduite selon la revendication 6, caractérisé en ce que le bras (60) est pourvu à son extrémité libre d'un ergot (62) qui fait saillie sur la surface frontale annulaire (32) formant un épaulement, s'étendant dans le sens de l'axe de rotation (18) du tenon.

8. Elément de conduite selon la revendication 7, caractérisé en ce que le bras (60) rejaillit avec sa surface située en regard de l'ergot (62) par rapport à un plan qui est formé par la face frontale (37) de la collerette annulaire (30) face tournée à l'opposé de l'enveloppe (46) du tourillon (28).

9. Elément de conduite selon l'une des revendications 5 à 8, caractérisé en ce que le tourillon (28) présente sur la face frontale (37) de la collerette annulaire (30) tournée à l'opposé de son enveloppe (46) un appendice dirigé dans le sens de l'axe de rotation (18) du tenon, appendice qui est pourvu d'un entraînement en rotation (38) pour l'élément de conduite (12).

10. Elément de conduite selon l'une des revendications 5 à 9, caractérisé en ce que le tourillon (28) présente sur sa collerette annulaire (30) deux sections (60) pouvant être élastiquement extensibles se faisant diamétralement vis-à-vis l'une l'autre.

11. Elément de conduite selon l'une des revendications 1 à 10, caractérisé en ce que le tourillon (28) présente sur son enveloppe (46) au moins une section (50) élastiquement extensible radialement par rapport à l'axe de rotation (18) du tenon.

12. Elément de conduite selon la revendication 11, caractérisé en ce que la section (50) est formée sur l'enveloppe (46) comme une languette (50) s'étendant sur un angle déterminé autour de l'axe de rotation (18) du tenon et solidement relié à une extrémité à l'enveloppe (46), languette qui coopère avec la paroi alésée (48) du coussinet (24).

13. Elément de conduite selon la revendication 12, caractérisé en ce que la languette (50) à son extrémité est pourvue d'un bourrelet (52) qui fait saillie sur le contour de l'enveloppe (46) du tenon.

14. Elément de conduite selon l'une des revendications 11 à 13, caractérisé en ce que le tourillon (28) présente sur son enveloppe (46) deux sections (50) situées diamétralement en regard l'une de l'autre, élastiquement extensibles.

15. Elément de conduite selon l'une des revendications 10 à 14, caractérisé en ce que les deux sections (60) disposées sur la collerette annulaire (30) sont disposées en regard des deux sections (50) sur l'enveloppe (46) du tourillon (28) décalées d'environ 90 degrés.

16. Elément de conduite selon l'une des revendications 5 à 15, caractérisé en ce qu'aussi bien le bras élastique (60) de la surface annulaire (32) de la collerette annulaire (30) qu'également la languette élastique (50) sur l'enveloppe (46) du tourillon (28) est exclusivement réalisé sur l'extrémité du bras (60) ou de la languette (50) reliée solidement à celle-ci.

17. Elément de conduite selon l'une des revendications 1 à 16, caractérisé en ce que le tourillon (28) est fabriqué en une matière plastique élastique.

18. Elément de conduite selon la revendication 17, caractérisé en ce que le tourillon (28) est relié d'un seul bloc à l'élément de conduite (12).

FIG.1

FIG. 2

FIG. 3

FIG.4

FIG.5

FIG.6

FIG.7